# EUROPEAN PATENT APPLICATION

(11) **EP 4 456 511 A1**
(43) Date of publication of application: **30.10.2024**
(21) Application number: 24171521.8
(22) Date of filing: 22.04.2024
(51) Int. Cl.: H04L 65/1073, H04L 12/28, H04L 67/025, H04L 67/125, H04W 4/021, H04W 4/80, H04W 60/04, H04W 84/18

(54) **CONTROL SYSTEM, CONTROL METHOD, AND PROGRAM IN A MESH NETWORK**

(30) Priority: 25.04.2023 JP 2023071556
(71) Applicant: Panasonic Intellectual Property Management Co., Ltd., Kadoma-shi, Osaka 571-0057 (JP)
(72) Inventor: NISHIYASU, Kazuma, Osaka, 571-0057 (JP); TOMIO, Yuta, Osaka, 571-0057 (JP); KAMEDA, Kosuke, Osaka, 571-0057 (JP)
(74) Representative: Appelt, Christian W.

(57) **Abstract**

A control system (information terminal (30)) includes an obtainer (36), a receiver (31), and a processing unit (34). The obtainer (36) obtains map information indicating an area where each of at least one device (20) (light fixture (20)) is disposed. The receiver (31) receives input of setting for each of the at least one device (20). The processing unit (34) performs registration processing for registering each of the at least one device (20) with a network (mesh network), in response to the input received by the receiver (31). Depending on whether obtainer 36 has obtained the map information, the processing unit (34) changes presentation of a registration image displayed on a display (32) for the registration processing.

## Description

### Field

The present invention relates to a control system, a control method, and a program that are used for control setting of a communication system.

### Background

Patent Literature (PTL) 1 discloses a technology of creating a mesh network with a plurality of lighting devices.

### Citation List

### Patent Literature

PTL 1: Japanese Unexamined Patent Application Publication No. 2021-163573

### Summary

### Technical Problem

The present invention provides a control system that enables easy displaying of an image appropriate to registration processing for registering each of at least one device.

### Solution to Problem

In accordance with an aspect of the present invention, a control system includes an obtainer, a receiver, and a processing unit. The obtainer obtains map information indicating an area where each of at least one device is disposed. The receiver receives input of setting for each of the at least one device. The processing unit performs registration processing for registering each of the at least one device with a network, in response to the input received by the receiver. Depending on whether the obtainer has obtained the map information, the processing unit changes presentation of a registration image displayed on a display for the registration processing.

In accordance with another aspect of the present invention, a control method includes: receiving input of setting for each of the at least one device; performing registration processing for registering each of the at least one device with a network, in response to the input received in the receiving; and changing presentation of a registration image displayed on a display for the registration processing, depending on whether map information indicating an area where each of the at least one device is disposed has been obtained.

In accordance with still another aspect of the present invention, a program causes at least one processor to execute the above-described control method.

### Advantageous Effects

The control system according to the present invention has an advantage of enabling easy displaying of an image appropriate to registration processing for registering each of at least one device.

### Brief Description of Drawings

**[****FIG. 1****]**

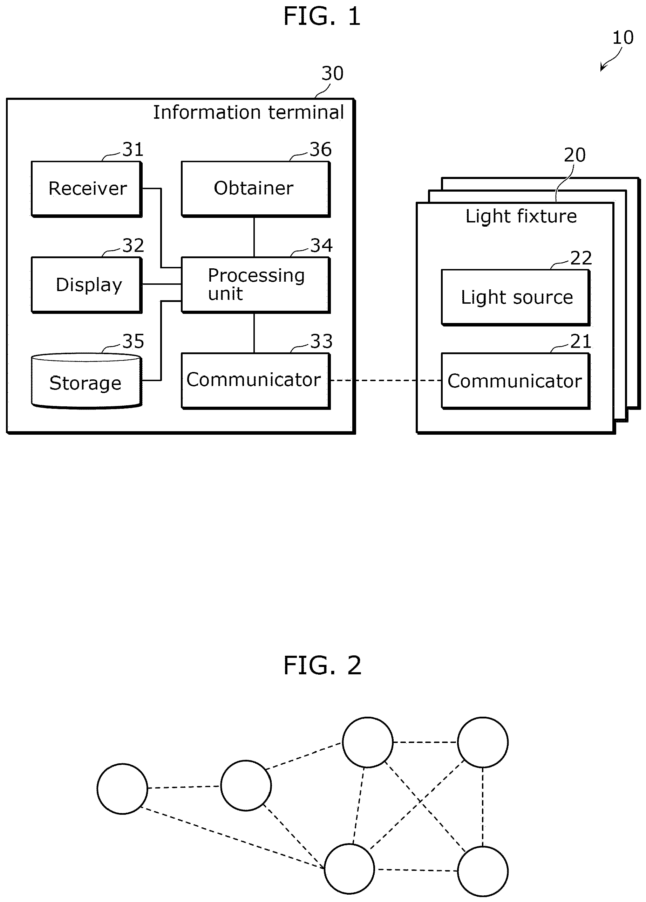

   FIG. 1 is a block diagram illustrating a functional configuration of a communication system that includes a control system according to Embodiment.
**[****FIG. 2****]**
   FIG. 2 is a conceptual diagram illustrating a mesh network.
**[****FIG. 3****]**

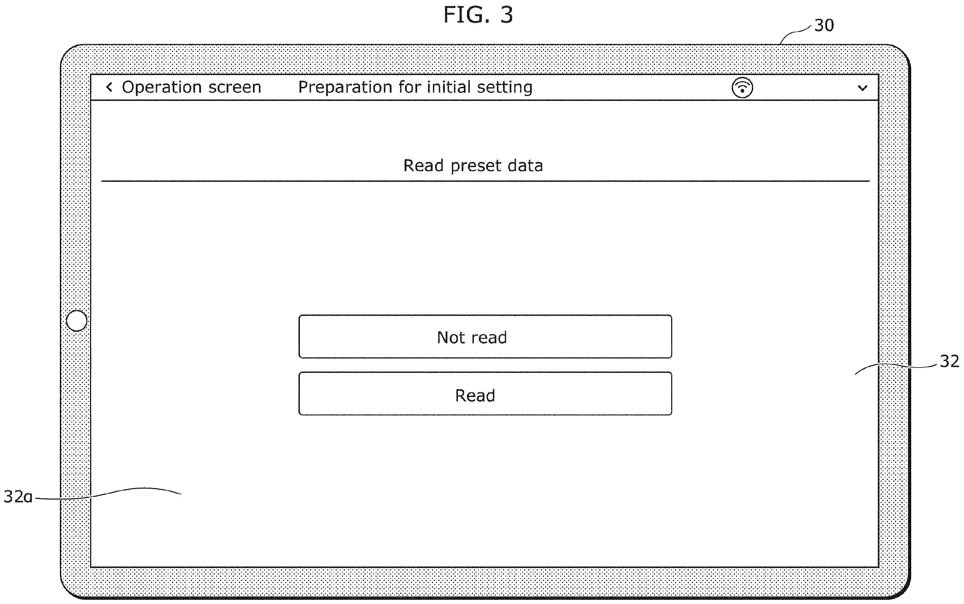

   FIG. 3 is a diagram illustrating an example of a read screen.
**[****FIG. 4****]**

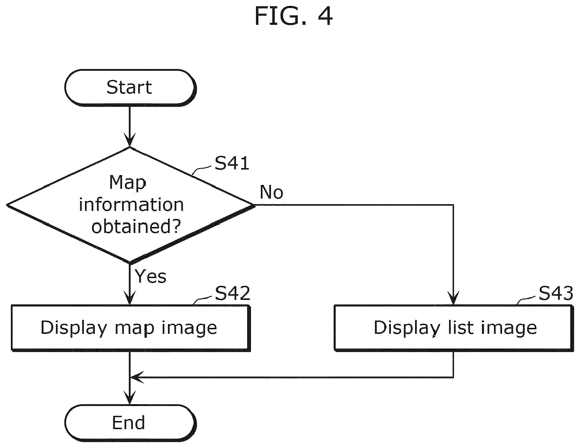

   FIG. 4 is a flowchart illustrating an example of an operation performed by the control system according to Embodiment.
**[****FIG. 5****]**

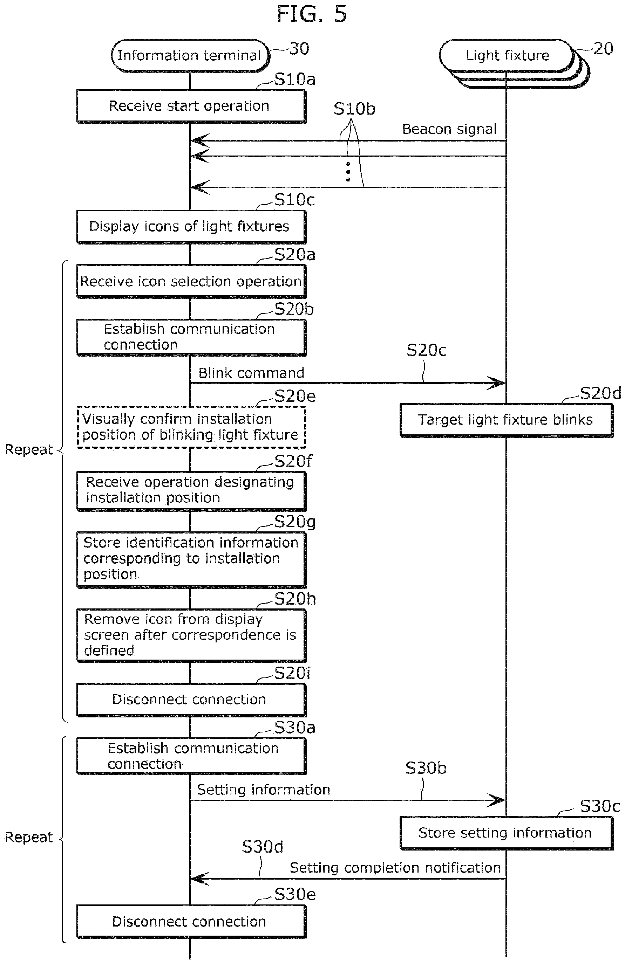

   FIG. 5 is a sequence diagram illustrating an example of a first registration operation.
**[****FIG. 6****]**

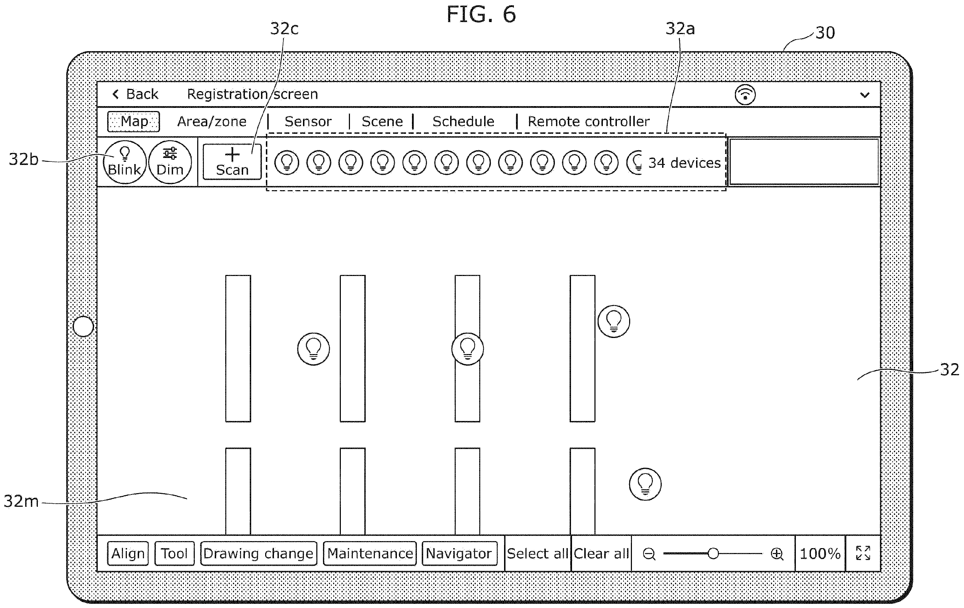

   FIG. 6 is a diagram illustrating an example of a registration screen displayed in the first registration operation.
**[****FIG. 7****]**

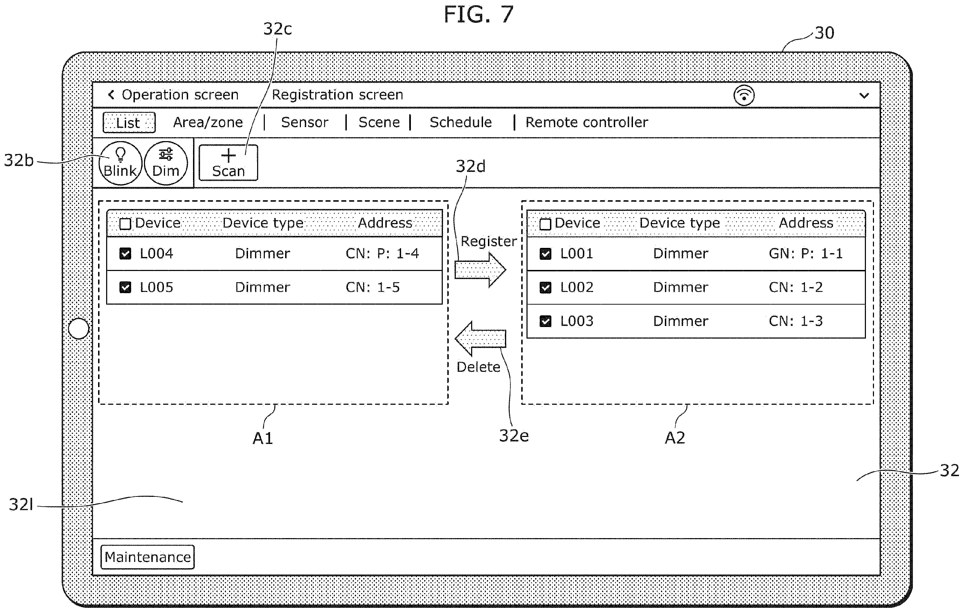

   FIG. 7 is a diagram illustrating an example of a registration screen displayed in a second registration operation.
**[****FIG. 8****]**

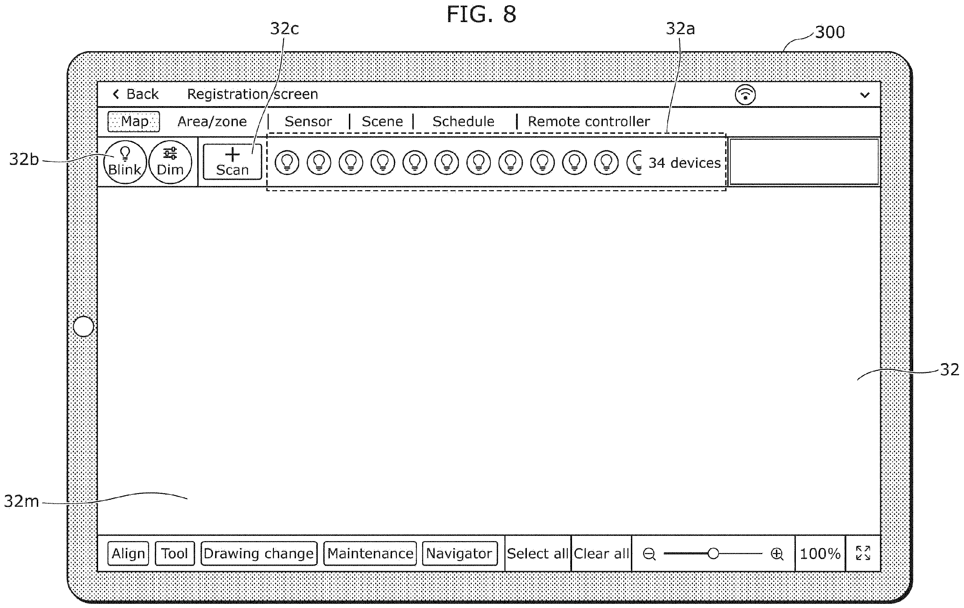

   FIG. 8 is a diagram illustrating a registration screen according to a comparison example.
**[****FIG. 9****]**

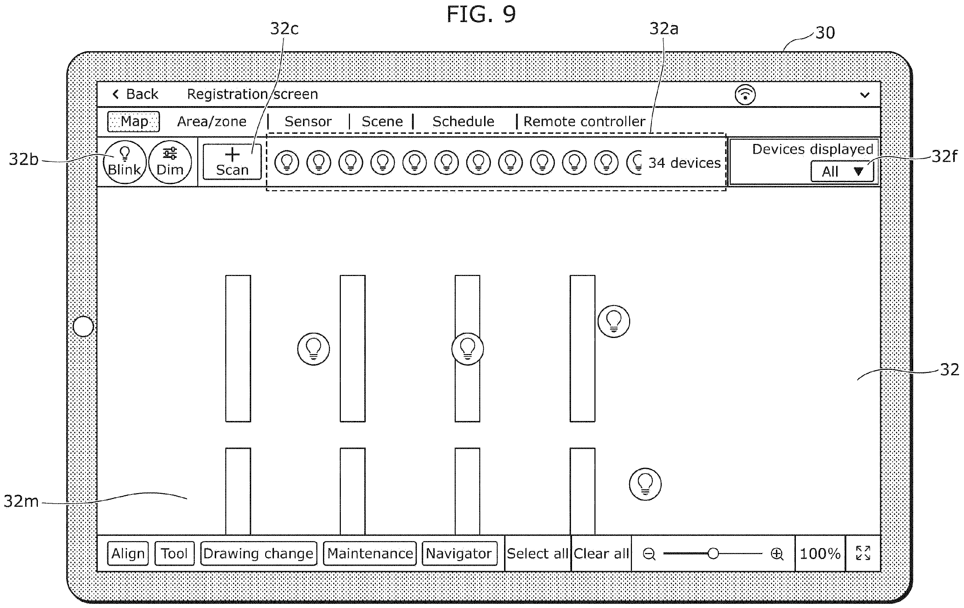

   FIG. 9 is a diagram illustrating an example of a registration screen according to Variation 1 of Embodiment.
**[****FIG. 10****]**

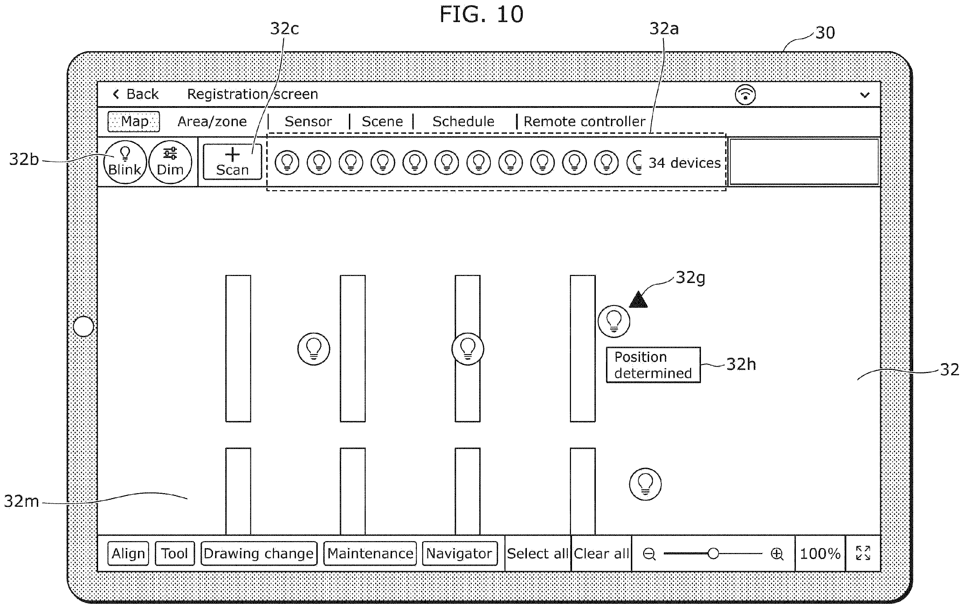

   FIG. 10 is a diagram illustrating an example of a registration screen according to Variation 2 of Embodiment.
**[****FIG. 11****]**

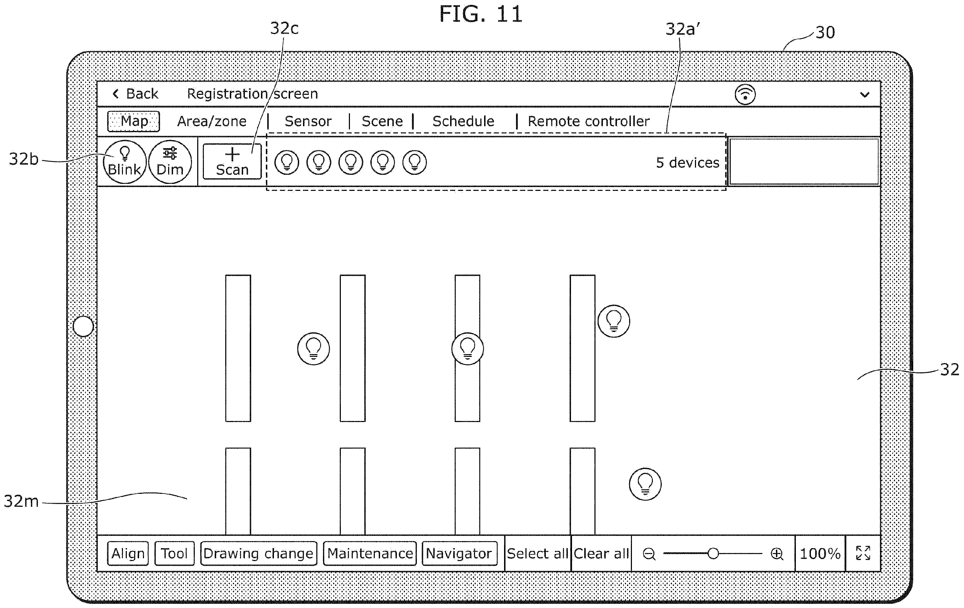

   FIG. 11 is a diagram illustrating an example of a registration screen displayed in a first registration operation according to Variation 3 of Embodiment.
**[****FIG. 12****]**

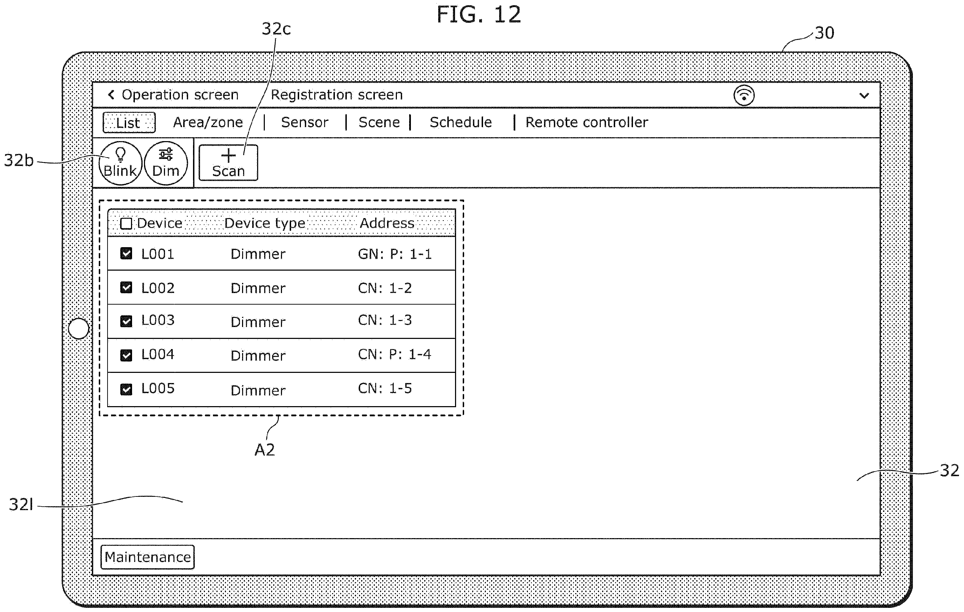

   FIG. 12 is a diagram illustrating an example of a registration screen displayed in a second registration operation according to Variation 3 of Embodiment.

### Description of Embodiment

Hereinafter, embodiments will be described in detail with reference to the accompanying Drawings. The following embodiments are general or specific examples of the present disclosure. The numerical values, shapes, materials, constituent elements, arrangement and connection configuration of the constituent elements, steps, the order of the steps, etc., described in the following embodiments are merely examples, and are not intended to limit the present disclosure. Among constituent elements in the following embodiments, those not described in any one of the independent claims indicating the broadest concept of the present disclosure are described as optional constituent elements.

Note that the respective figures are schematic diagrams and are not necessarily precise illustrations. In the drawings, elements regarding substantially identical structures are assigned with a same reference sign, and explanation of such substantially identical elements is not repeated or is simplified.

### Embodiment

### [Configuration]

The configuration of a communication system according to Embodiment is firstly described. FIG. 1 is a block diagram illustrating the functional configuration of the communication system that includes a control system according to Embodiment. As illustrated in FIG. 1, communication system 10 includes a plurality of devices 20 and information terminal 30. Device 20 is a light fixture in Embodiment. In the following description, device 20 is referred to as "light fixture 20" unless otherwise specified. Furthermore, information terminal 30 corresponds to the control system in Embodiment.

Each of the plurality of light fixtures 20 included in communication system 10 has a wireless communication function. The plurality of light fixtures 20 make up a wireless mesh network (hereafter, also referred to simply as a "mesh network"). FIG. 2 is a conceptual diagram illustrating the mesh network. A circle illustrated in FIG. 2 corresponds to one light fixture 20 (or more specifically, a communication node). For transmission of information from one communication node (also referred to as a first communication node) to another communication node (also referred to as a second communication node) in the mesh network, a flooding technique is used.

To be more specific, when the first communication node broadcasts information that includes address information (destination information) on the second communication node, each of other communication nodes belonging to the same mesh network as the first communication node receives this information and in turn broadcasts the received information. In other words, each of the other communication nodes relays the information. Such repetition of relay of the information in one mesh network allows the information transmitted by the first communication node to reach all the communication nodes belonging to the same mesh network as the first communication node. Thus, the second communication node is able to receive the information transmitted by the first communication node.

The information transmitted via the mesh network is control information used for turning-on control, turning-off control, and dimming control of light fixture 20, for example. In the mesh network that includes an environmental sensor, a measurement value (sensing information) obtained by the environmental sensor may be transmitted.

Firstly, light fixture 20 is described. Light fixture 20 is, for example, a base light fixture attached to the ceiling of an indoor space to illuminate the indoor space. As described above, each of the plurality of light fixtures 20 has the wireless communication function and makes up the mesh network. Note that the type of light fixture 20 is not intended to be limiting. Light fixture 20 may be a ceiling light fixture, a downlight fixture, or a spotlight fixture. Specifically, light fixture 20 includes communicator 21 and light source 22.

Communicator 21 is a wireless communication circuit that e nables light fixture 20 to perform wireless communication (or mor e specifically, radio communication) with another light fixture 20 and information terminal 30. After light fixture 20 joins the mes h network, communicator 21 performs communication via the mes h network described above. Before light fixture 20 joins the mes h network, communicator 21 periodically transmits a beacon signa l (also known as an advertising signal) and performs wireless com munication individually with information terminal 30 that received the beacon signal. Specifically, communicator 21 performs wirele ss communication according to a communication standard, such as Bluetooth (registered trademark) Low Energy (BLE) or Wi-Fi (regi stered trademark).

Light source 22 emits white light into the indoor space to enable light fixture 20 to illuminate the indoor space. For example, light source 22 is implemented by a light emitting diode (LED) device. However, light source 22 may be implemented by a different light emitting device, such as a semiconductor laser, an organic electroluminescent (organic EL) device, or an inorganic EL device.

Next, the configuration of information terminal 30 is described. Information terminal 30 performs: a registration operation to allow the plurality of light fixtures 20 to join the mesh network; and a control setting operation for various controls over the plurality of light fixtures 20. For example, information terminal 30 is a mobile terminal, such as a smartphone, a tablet, or a personal digital assistant (PDA). Information terminal 30 may be a laptop personal computer, for example. Alternatively, information terminal 30 may be a remote controller dedicated to communication system 10. Information terminal 30 is used by a user that performs registration operation for instance. Here, the user is an installer that installs the plurality of light fixtures 20 to the ceiling, for example. However, the user may be a different person other than the installer. Specifically, information terminal 30 includes receiver 31, display 32, communicator 33, processing unit 34, storage 35, and obtainer 36.

Receiver 31 receives input of various kinds by receiving an operation performed by the user. In Embodiment, receiver 31 receives input of control setting for each of at least one device 20 (the plurality of light fixtures 20 in this case). Specifically, receiver 31 is implemented by a touch panel, for example.

Display 32 displays an image necessary for the aforementioned registration. For example, display 32 is implemented by a display panel, such as a liquid crystal panel or an organic EL panel.

Communicator 33 is a wireless communication circuit that enables information terminal 30 to perform wireless communication (or more specifically, radio communication) with each of the plurality of light fixtures 20. Specifically, communicator 33 performs wireless communication according to a communication standard, such as BLE or Wi-Fi (registered trademark).

Processing unit 34 performs information processing related to the registration operation, in response to an operation performed by the user and received by receiver 31. More specifically, in response to the input received by receiver 31, processing unit 34 performs registration processing for registering each of the at least one device 20 (the plurality of light fixtures 20 in this case) with a network (a mesh network). Processing unit 34 is implemented by a microcomputer, for example. However, processing unit 34 may be implemented by a processor or a dedicated circuit. A function of processing unit 34 is achieved by hardware of processing unit 34, such as the microcomputer or the processor, executing a computer program (software) stored in storage 35.

Storage 35 stores information, such as the computer program executed by processing unit 34, necessary for the information processing related to the registration operation. Storage 35 is implemented by a semiconductor memory, for example.

Obtainer 36 obtains map information indicating an area where the at least one device 20 (the plurality of light fixtures 20 in this case) is installed (disposed). The map information is a still-image file in Joint Photographic Experts Group (JPEG) format or Portable Network Graphics (PNG) format. While display 32 displays read screen 32α as illustrated in FIG. 3 for example, receiver 31 receives a read operation performed by the user to start reading. As a result of this receipt, obtainer 36 obtains the map information by reading preset data stored in a memory of information terminal 30 or in an external memory connected to information terminal 30.

FIG. 3 is a diagram illustrating an example of read screen 32α. A selection operation performed on the icon of "Read" by the user in the example illustrated in FIG. 3 is received as the read operation by receiver 31. Note that obtainer 36 may obtain the map information either before or after the registration operation is performed for the first time. If obtainer 36 obtains the map information after the first-time registration operation, this map information is to be referenced in the registration operation performed next time.

### [Registration Operation]

Next, the registration operation performed to create a mesh network is described. In Embodiment, depending on whether obtainer 36 has obtained the map information, processing unit 34 changes presentation of a registration image displayed on display 32 for the registration processing. FIG. 4 is a flowchart illustrating an example of an operation performed by information terminal 30 (the control system) according to Embodiment. As illustrated in FIG. 4, if the map information has been obtained (Yes in S41), processing unit 34 displays the registration image including map image 32m (see FIG. 6) on display 32 for the registration processing. Although described in detail later, map image 32m is an image that is used for placement setting that establishes a correspondence between the installation position of a target device for registration (target light fixture 20 in this case) in the area and identification information on the target device.

If the map information has not been obtained (No in S41), processing unit 34 displays the registration image including list image 321 (see FIG. 7) on display 32 for the registration processing. Although described in detail later, list image 321 is an image that indicates a list of at least one device 20 among the at least one device 20 (the plurality of light fixtures 20 in this case).

Hereafter, the registration operation performed when the map information has been obtained, or more specifically, the registration operation performed when the registration image including map image 32m is displayed on display 32, is also referred to as the "first registration operation". Moreover, the registration operation performed when the map information has not been obtained, or more specifically, the registration operation performed when the registration image including list image 321 is displayed on display 32, is also referred to as the "second registration operation".

### [First Registration Operation]

Firstly, the first registration operation is described. Specific processes performed in the first registration operation are described with reference to a sequence diagram and a registration screen. FIG. 5 is a sequence diagram illustrating an example of the first registration operation. FIG. 6 is a diagram illustrating an example of the registration screen displayed in the first registration operation. The first registration operation illustrated in FIG. 5 is performed after the user, such as an installer, installs the plurality of light fixtures 20 to the ceiling.

Receiver 31 of information terminal 30 receives a start operation performed by the user to start the first registration operation (S10a). To be more specific, by receiving a selection operation performed by the user on scan icon 32c in the registration screen displayed on display 32, receiver 31 receives the operation to start the first registration operation. Before joining the mesh network, each of the plurality of light fixtures 20 periodically transmits a beacon signal (also known as an advertising signal) (SlOb). Upon receipt of the start operation in Step S10a, communicator 33 of information terminal 30 receives the beacon signal. The beacon signal transmitted from light fixture 20 includes identification information that identifies light fixture 20. Although a media access control (MAC) address is used as the identification information for example, this is not intended to be limiting. Any information that uniquely identifies light fixture 20 can be used as the identification information.

Processing unit 34 displays icons of the plurality of light fixtures 20 that are transmission sources of the received beacon signals, on display 32 (S10c). As illustrated in FIG. 6, the registration screen displays a plurality of icons 32a in a single row, corresponding to the plurality of light fixtures 20 that are the transmission sources of the beacon signals.

Furthermore, the registration screen illustrated in FIG. 6 also displays map image 32m. Map image 32m is a top view of the area where the plurality of light fixtures 20 are installed.

Next, receiver 31 receives a selection operation performed on the plurality of icons 32a by the user (S20a). The selection operation is a tap on one of the plurality of icons 32a, for example. In response to the selection operation received by receiver 31, processing unit 34 establishes a communication connection between communicator 33 and light fixture 20 corresponding to icon 32a selected (hereafter, this light fixture 20 is also referred to as target light fixture 20) (S20b). Then, processing unit 34 starts individual communication (one-to-one communication) with target light fixture 20. Processing unit 34 causes communicator 33 to transmit a blink command (S20c). For example, after the selection operation, the blink command is transmitted upon the receipt of the tap on blink icon 32b.

The blink command is a signal selectively causing target light fixture 20 to blink. Receiving the blink command, target light fixture 20 blinks (S20d). This allows the user to identify target light fixture 20.

The user visually confirms the actual installation position of blinking target light fixture 20 (S20e). Then, the user designates the installation position of blinking target light fixture 20 on map image 32m. Receiver 31 receives the operation from the user designating the installation position of light fixture 20 on map image 32m (S20f). This causes processing unit 34 to store the identification information indicated by icon 32a selected in Step S20a, corresponding to the installation position (that is, coordinates) designated in Step S20f (S20g). Furthermore, processing unit 34 removes icon 32a from the display screen after the correspondence of icon 32a with the installation position is defined (S20h). As a result, the number of icons 32a displayed in Step S10c is reduced by one. Then, processing unit 34 disconnects the communication connection established with target light fixture 20 (S20i).

Steps S20a to S20i are repeated until establishment of correspondence between icon 32a (that is, the identification information) and the installation position is completed for all icons 32a displayed in Step S10c. As a result of this, storage 35 stores correspondence information indicating a correspondence between identification information and installation position for each of the plurality of light fixtures 20. More specifically, the plurality of light fixtures 20 are registered with information terminal 30.

After this, in response to a designation operation performed on one of plurality light fixtures 20 and received by receiver 31 for example, processing unit 34 establishes a communication connection between light fixture 20 designated and communicator 33 (S30a). Then, processing unit 34 starts individual communication with this light fixture 20. Processing unit 34 causes communicator 33 to transmit the setting information to this light fixture 20 (S30b). Receiving the setting information, light fixture 20 stores this setting information into a storage (not shown) included in light fixture 20 (S30c).

The setting information allows light fixture 20 to join the mesh network. The setting information includes: a network ID of the mesh network where light fixture 20 belongs; and address information (a unicast address) on light fixture 20 that is used for communication in the mesh network. The setting information may also include, as appropriate, a security passcode used for communication in the mesh network and information related to information terminal 30 (information related to a device that manages the mesh network). After storing the setting information into the storage, light fixture 20 is allowed to join the mesh network.

After storing the setting information, light fixture 20 transmits a setting completion notification to information terminal 30 (S30d). Upon receipt of the setting completion notification by communicator 33, processing unit 34 of information terminal 30 disconnects the communication connection established with light fixture 20 in Step S30a (S30e).

Steps S30a to S30e are repeated until all light fixtures 20 join the mesh network. After joining the mesh network, light fixture 20 stops, as appropriate, the beacon signal transmission that is periodically performed before joining the mesh network.

Note that Steps S20i and S30a may be omitted. More specifically, Steps S30b to S30e may be performed without disconnecting the communication connection in Step S20i.

### [Second Registration Operation]

Next, the second registration operation is described. Specific processes performed in the second registration operation are described with reference to a registration screen. FIG. 7 is a diagram illustrating an example of the registration screen displayed in the second registration operation. Note that the processes identical to those performed in the first registration operation are omitted as appropriate from the following description.

Receiver 31 of information terminal 30 receives a start operation performed by the user to start the second registration operation. To be more specific, by receiving a selection operation performed by the user on scan icon 32c in the registration screen displayed on display 32, receiver 31 receives the operation to start the second registration operation. As in the first registration operation, communicator 33 receives the beacon signal from light fixture 20 upon the receipt of the start operation.

Processing unit 34 displays, on display 32, a list of light fixtures 20 that are the transmission sources of the received beacon signals. As illustrated in FIG. 7, the registration screen displays list image 321. List image 321 includes: unregistered-device list A1 that contains unregistered devices (unregistered light fixtures 20 in this case) that are not registered with the network (the mesh network); and registered-device list A2 that contains registered devices (registered light fixtures 20 in this case) that are registered with the network. More specifically, processing unit 34 displays, on display 32, unregistered-device list A1 indicating the unregistered devices among the at least one device 20 (the plurality of light fixtures 20 in this case) and registered-device list A2 indicating the registered devices among the at least one device 20 (the plurality of light fixtures 20 in this case). Note that at the time of receiving the beacon signals from light fixtures 20, list image 321 shows unregistered-device list A1 without showing registered-device list A2.

Next, receiver 31 receives a designation operation performed on registration-target light fixture 20 by the user. To be more specific, the user performs a selection operation to select at least one checkbox corresponding to at least one registration-target light fixture 20 in unregistered-device list A1 and also taps registration icon 32d. As a result, at least one light fixture 20 selected is registered with information terminal 30. Then, the at least one light fixture 20 that is registered is displayed in registered-device list A2 and removed from unregistered-device list A1.

In the example illustrated in FIG. 7, among unregistered devices "L001", "L002", "L003", "L004", and "L005," devices "L001", "L002", and "L003" are registered. As illustrated in FIG. 7, registered devices "L001", "L002", and "L003" are displayed in registered-device list A2 and unregistered devices "L004" and "L005" are displayed in unregistered-device list A1.

Here, to visually confirm the installation position of registration-target light fixture 20, the user may perform a selection operation on registration-target light fixture 20 and tap blink icon 32b. As in the first registration operation, processing unit 34 causes communicator 33 to transmit the blink command to registration-target light fixture 20. Receiving the blink command, registration-target light fixture 20 blinks. This allows the user to identify registration-target light fixture 20.

To deregister registered light fixture 20, the user may perform a selection operation to select at least one checkbox corresponding to deregistration-target light fixture 20 in registered-device list A2 and also tap deregister icon 32e. As a result, at least one light fixture 20 selected is deregistered. The at least one light fixture 20 deregistered is displayed in unregistered-device list A1 and removed from registered-device list A2.

After this, as in the first registration operation, processing unit 34 repeats Steps S30a to S30e until all light fixtures 20 joins the mesh network. After joining the mesh network, light fixture 20 stops, as appropriate, the beacon signal transmission that is periodically performed before joining the mesh network.

### [Advantages]

Hereafter, the advantages of information terminal 30 (the control system) according to Embodiment are described in comparison with information terminal 300 (see FIG. 8) according to a comparison example. Information terminal 300 according to the comparison example is different from information terminal 30 according to Embodiment in that the processing unit displays, on display 32, a registration image including map image 32m regardless of whether the map information has been obtained. In other words, information terminal 300 according to the comparison example is different from information terminal 30 according to Embodiment in that the user performs the first registration operation regardless of whether the map information has been obtained.

FIG. 8 is a diagram illustrating a registration screen according to the comparison example. As illustrated in FIG. 8, information terminal 300 according to the comparison example displays map image 32m on display 32 even if the map information has not been obtained. More specifically, a display area for map image 32m on display 32 is blank. Thus, the user of information terminal 300 according to the comparison example needs to perform an operation to designate the installation position for each of light fixtures 20 on map image 32m that is blank. Otherwise, the first registration operation cannot be completed.

In this way, when the map information has not been obtained by information terminal 300 according to the comparison example, an unnecessary operation needs to be performed to designate the installation position of light fixture 20 on a blank map. Otherwise, light fixture 20 cannot be registered with information terminal 300 according to the comparison example. This often takes a longer time to finish the registration.

In contrast, depending on whether the map information has been obtained, information terminal 30 according to Embodiment changes presentation of the registration image displayed on display 32. For example, when the map information has not been obtained, information terminal 30 according to Embodiment displays a registration image that requires no unnecessary operation described above. Thus, information terminal 30 according to Embodiment has an advantage of easily displaying the image appropriate to the registration processing for registering the at least one device 20 (the plurality of light fixtures 20 in this case).

For example, processing unit 34 according to Embodiment displays the registration image including list image 321 on display 32 when obtainer 36 has not obtained the map information. This has an advantage of saving the user from performing an unnecessary operation of designating the installation position of light fixture 20 on a blank map for the registration and thereby easily reducing the time taken for the registration.

### [Variations]

Although Embodiment has been described thus far, the present invention is not limited to Embodiment described above.

### [Variation 1]

Hereafter, information terminal 30 (a control system) according to Variation 1 of Embodiment is described. Information terminal 30 according to Variation 1 is different from information terminal 30 according to Embodiment in that processing unit 34 displays either an unregistered-device list or an unplaced-device list, in response to input received by receiver 31. An unregistered device refers to device 20 that is not registered with a network (a mesh network) among at least one device 20 (a plurality of light fixtures 20 in this case). An unplaced device refers to a device for which the placement setting has not been performed among the at least one device 20.

FIG. 9 is a diagram illustrating an example of a registration screen according to Variation 1 of Embodiment. As illustrated in FIG. 9, pull-down menu 32f is displayed on the registration screen in Variation 1. With a tap on pull-down menu 32f, a corresponding plurality of icons 32a are displayed in a single row. More specifically, with the tap, the user is able to select one of: a list of all light fixtures 20; an unregistered-device list (list of unregistered light fixtures 20); or an unplaced-device list (list of light fixtures 20 for which the placement setting has not been performed). In response to the selection operation performed on pull-down menu 32f by the user and received by receiver 31, processing unit 34 displays the list of light fixtures 20 selected by the selection operation in the display area.

Information terminal 30 according to Variation 1 has an advantage of enabling easy registration by displaying, on display 32, the list of light fixtures 20 selected by the user for confirmation. For example, suppose that the second registration operation is performed in the first-time registration before obtainer 36 obtains the map information. In this second registration operation, the placement setting is not performed for light fixture 20. Thus, in the registration for next time, it is likely that the first registration operation is performed and that the placement setting is performed for light fixture 20. In such a case, the unplaced-device list displayed on display 32 as a result of the operation performed on pull-down menu 32f allows the user to easily confirm light fixture 20 for which the placement setting has been performed.

### [Variation 2]

Hereafter, information terminal 30 (a control system) according to Variation 2 of Embodiment is described. Information terminal 30 according to Variation 2 is different from information terminal 30 according to Embodiment as follows. If at least one device 20 (a plurality of light fixtures 20 in this case) includes an unplaced device for which the placement setting has not been performed, processing unit 34 in Variation 2 places the unplaced device in any given position on map image 32m and displays mark 32g on display 32. Mark 32g means "yet-to-be-determined", indicating that the placement setting has not been performed for this unplaced device.

FIG. 10 is a diagram illustrating an example of a registration screen according to Variation 2 of Embodiment. As illustrated in FIG. 10, map image 32m shows light fixture 20 for which the placement setting has been performed and an unplaced device for which the placement setting has not been performed. The unplaced device is marked with triangular mark 32g meaning "yet-to-be-determined". This allows the user to visually confirm the unplaced device by looking at the registration screen.

By receiving a drag-and-drop operation performed by the user on the unplaced device, receiver 31 receives an operation designating the installation position of the unplaced device on map image 32m. Upon receipt of the tap performed by the user to select the unplaced device, processing unit 34 displays icon 32h meaning "determined" near this unplaced device. Then, when receiver 31 receives an operation performed by the user to select icon 32h meaning "determined", processing unit 34 performs the placement setting for this unplaced device. As a result, the installation position of the unplaced device on map image 32m is determined. After the completion of the placement setting for the unplaced device, processing unit 34 deletes mark 32g meaning "yet-to-be-determined".

Note that when receiver 31 receives the tap performed by the user to select the unplaced device, processing unit 34 may perform the placement setting for this unplaced device without displaying icon 32h meaning "determined" on display 32.

Information terminal 30 according to Variation 2 has an advantage of enabling easy registration for the user by automatically placing the unplaced device on map image 32m. For example, suppose that the second registration operation is performed in the first-time registration before obtainer 36 obtains the map information. In this second registration operation, the placement setting is not performed for light fixture 20. Thus, in the registration for next time, it is likely that the first registration operation is performed and that the placement setting is performed for light fixture 20. In such a case, the unplaced device is automatically placed on map image 32m, thereby allowing the user to simply move the unplaced device to the actual installation position.

### [Variation 3]

Hereafter, information terminal 30 (a control system) according to Variation 3 of Embodiment is described. Information terminal 30 according to Variation 3 is different from information terminal 30 according to Embodiment in that, when detecting at least one device 20 (a plurality of light fixtures 20 in this case), processing unit 34 registers the at least one device 20 with a network (a mesh network).

FIG. 11 is a diagram illustrating an example of a registration screen displayed in a first registration operation according to Variation 3 of Embodiment. In the first registration operation, processing unit 34 registers, with the network, light fixture 20 detected in response to input (an operation of selecting scan icon 32c in this case) received by receiver 31. Then, processing unit 34 displays, on display 32, a list of registered devices (registered light fixtures 20 in this case) that are registered with the network as a list of unplaced devices for which the placement setting has not been performed. The registration screen in the example illustrated in FIG. 11 displays a plurality of icons 32a' in a single row, corresponding to the plurality of unplaced devices.

FIG. 12 is a diagram illustrating an example of a registration screen displayed in a second registration operation according to Variation 3 of Embodiment. In the second registration operation, processing unit 34 registers, with the network, light fixture 20 detected in response to input (an operation of selecting scan icon 32c in this case) received by receiver 31. Then, processing unit 34 displays, on display 32, a list of registered devices (registered light fixtures 20 in this case) that are registered with the network. The registration screen in the example illustrated in FIG. 12 displays registered-device list A2.

Information terminal 30 according to Variation 3 has an advantage of saving the user from designating light fixture 20 for registration because the operation of detecting light fixture 20 by the user allows light fixture 20 to be registered with the network. In the first registration operation in particular, the user is able to simply register light fixture 20 with information terminal 30 without having to proceed to the placement setting of light fixture 20.

### [Other Variations]

In Embodiment above, if obtainer 36 has obtained the map information, processing unit 34 may display either the registration image including map image 32m or the registration image including list image 321 on display 32 in response to input received by receiver 31, for example. In this aspect, the user is able to select the second registration operation instead of the first registration operation even if obtainer 36 has obtained the map information. This has an advantage that, when simply wanting to register light fixture 20 with the mesh network without the placement setting of light fixture 20 for example, the user is able to perform only the registration by selecting the second registration operation.

For example, the mesh network in Embodiment above is made up of the plurality of light fixtures 20. However, this is not intended to be limiting. For example, the mesh network may be made up of information terminal 30 and the plurality of light fixtures 20. Alternatively, the mesh network may be made up of a plurality of devices 20 of different kind (devices 20 that are not light fixtures 20). Alternatively, the mesh network may include different device 20 in addition of the plurality of light fixtures 20.

Different device 20 described above may be a lighting remote controller operated by the user to control light fixture 20, or an alternating-current (AC) relay, for example. Note that the AC relay refers to a device that is mounted to a wiring duct and capable of turning on and off a light fixture mounted to the wiring duct by switching on and off the supply of AC power to the wiring duct. The AC relay may be a device that is capable of turning on and off all light fixtures mounted to a wiring duct by switching on and off the supply of AC power to the wiring duct.

Different device 20 described above may be a device that is not directly related to lighting. Examples of such include an air conditioner, a ventilator, a camera, a human detecting sensor, and an environmental sensor. Note that the environmental sensor includes a temperature sensor, a humidity sensor, a carbon dioxide concentration sensor, or a particle matter (PM) sensor, for example.

In Embodiment above, light source 22 of light fixture 20 is a state presenter that allows the user to visually confirm the installation position of light fixture 20. However, since device 20 making up the mesh network is not limited to light fixture 20, various kinds of component may be used as a state presenter included in device 20.

For example, device 20 may include a light source as the state presenter (or include an LED indicator for instance if device 20 is not light fixture 20). Device 20 may include a loudspeaker as the state presenter and present the state by outputting a sound. Alternatively, device 20 may use an exclusive feature of device 20 (such as a blower function if device 20 is an air conditioner) as the state presenter. Note that, based on a control command transmitted from information terminal 30, the state presenter may operate differently from a state presenter included in another device 20.

In Embodiment above, the identification information on light fixture 20 is stored corresponding to the installation position of light fixture 20 when light fixture 20 is registered with information terminal 30, for example. However, the registration of light fixture 20 need not necessarily include establishment of correspondence between identification information and installation position. For example, to display light fixtures 20 joining the mesh network on display 32 in list form instead of map form, establishment of correspondence between identification information and installation position of light fixture 20 is unnecessary.

For example, it is possible in the above-described embodiments that the process performed by a certain processing unit may be performed by another processing unit, that an order of a plurality of processes is changed, or that a plurality of processes are performed in parallel.

For example, each of the constituent elements such as processing units in the above embodiment may be realized by executing a software program suitable for the constituent element. Each of the constituent elements may be realized by means of a program executing unit, such as a Central Processing Unit (CPU) or a processor, reading and executing the software program recorded on a recording medium such as a hard disk or a semiconductor memory.

Each of the constituent elements such as the processing units may be configured in the form of a hardware product. For example, the constituent elements such as the processing units may be implemented to circuits (or integrated circuits). These circuits may form a single circuit, or serve as separate circuits. Each circuit may be may be a general-purpose circuit or a dedicated circuit.

It should be noted that general or specific aspects of the present disclosure may be implemented to a system, a device, a method, an integrated circuit, a computer program, a non-transitory computer-readable recording medium such as a Compact Disc-Read Only Memory (CD-ROM), or any given combination thereof.

For example, the present invention may be implemented to a control system or an information terminal according to the above-described embodiment, or may be implemented to a method (control method etc.) executed by the information terminal. The present invention may be implemented to a program causing a computer to execute such a method, or a non-transitory computer-readable recording medium on which the program is recorded. Such programs include an application program that causes a computer such as a general-purpose information terminal to function as the information terminal according to the above-described embodiment.

In addition, the present disclosure may include embodiments obtained by making various modifications on the above embodiments which those skilled in the art will arrive at, or embodiments obtained by selectively combining the constituent elements and functions disclosed in the above embodiment, without materially departing from the scope of the present disclosure.

### (Summary)

As described above, a control system (information terminal 30) according to a first aspect includes obtainer 36, receiver 31, and processing unit 34. Obtainer 36 obtains map information indicating an area where each of at least one device 20 (light fixture 20) is installed. Receiver 31 receives input of setting for each of the at least one device 20. Processing unit 34 performs registration processing for registering each of the at least one device 20 with a network (mesh network), in response to the input received by receiver 31. Depending on whether obtainer 36 has obtained the map information, processing unit 34 changes presentation of a registration image displayed on display 32 for the registration processing.

The control system described above displays the registration image that requires no unnecessary operation when the map information has not been obtained, for example. Thus, the control system has an advantage of easily displaying the image appropriate to the registration processing for registering the at least one device 20.

For example, in the control system according to a second aspect, it is possible in the first aspect that if obtainer 36 has obtained the map information, processing unit 34 displays, on display 32 in response to the input received by receiver 31, the registration image including map image 32m that is used for placement setting performed to associate an installation position of a registration-target device (registration-target light fixture 20) in the area with identification information on the registration-target device.

The control system described above has an advantage of allowing the user to easily associate the installation position of device 20 with the identification information on device 20.

For example, in the control system according to a third aspect, it is possible in the second aspect that the control system that processing unit 34 displays, on display 32 in response to the input received by receiver 31, one of: a list of one or more unregistered devices that are not registered with the network, among the at least one device 20; or a list of one or more unplaced devices for which the placement setting has not been performed, among the at least one device 20.

The control system described above has an advantage of enabling easy registration by displaying, on display 32, the list of light fixtures 20 selected for confirmation by the user.

For example, in the control system according to a fourth aspect, it is possible in the second or third aspect that if the at least one device 20 includes an unplaced device for which the placement setting has not been performed, processing unit 34 places the unplaced device in any given position on map image 32m and displays mark 32g meaning yet-to-be-determined on display 32, mark 32g indicating that the placement setting has not been performed for the unplaced device.

The control system described above has an advantage of enabling easy registration for the user by automatically placing the unplaced device on map image 32m.

For example, in the control system according to a fifth aspect, it is possible in any one of the second to fourth aspects that processing unit 34 registers, with the network, each of the at least one device 20 that is detected in response to the input received by receiver 31 and displays, on display 32, a list of one or more registered devices that are registered with the network as a list of one or more unplaced devices (a plurality of icons 32a') for which the placement setting has not been performed.

The control system described above has an advantage of saving the user from designating light fixture 20 for registration because the operation of detecting light fixture 20 by the user allows light fixture 20 to be registered with the network.

For example, in the control system according to a sixth aspect, it is possible in any one of the first to fifth aspects that if obtainer 36 has not obtained the map information, processing unit 34 displays, on display 32, the registration image including list image 321 that indicates a list of at least one device 20 among the at least one device 20.

The control system described above has an advantage of saving the user from performing an unnecessary operation of designating the installation position of light fixture 20 on a blank map for the registration and thereby easily reducing the time taken for the registration.

For example, in the control system according to a seventh aspect, it is possible in the sixth aspect that processing unit 34 displays, on display 32, list A1 of one or more unregistered devices that are not registered with the network among the at least one device 20 and list A2 of one or more registered devices that are registered with the network among the at least one device 20.

The control system described above has an advantage of allowing the user to easily confirm a registered device and an unregistered device.

For example, in the control system according to an eighth aspect, it is possible in the sixth aspect that processing unit 34 registers, with the network, each of the at least one device 20 that is detected in response to the input received by receiver 31 and displays, on display 32, list A2 of one or more registered devices that are registered with the network.

The control system described above has an advantage of saving the user from designating light fixture 20 for registration because the operation of detecting light fixture 20 by the user allows light fixture 20 to be registered with the network.

For example, in the control system according to a ninth aspect, it is possible in the first aspect that if obtainer 36 has obtained the map information, processing unit 34 displays, on display 32 in response to the input received by receiver 31, one of: the registration image including map image 32m that is used for placement setting performed to associate an installation position of a setting-target device in the area with identification information on the setting-target device; or the registration image including a list image that indicates a list of at least one device 20 among the at least one device 20.

The control system described above has an advantage of allowing the user to perform only the registration when simply wanting to register light fixture 20 with the mesh network without the placement setting of light fixture 20 for example.

For example, a control method according to a tenth aspect includes: receiving input of setting for each of the at least one device 20; performing registration processing for registering each of the at least one device 20 with a network, in response to the input received in the receiving; and changing presentation of a registration image displayed on a display for the registration processing, depending on whether map information indicating an area where each of the at least one device 20 is installed has been obtained (S41 to S43).

The control system described above displays the registration image that requires no unnecessary operation when the map information has not been obtained, for example. Thus, the control system has an advantage of easily displaying the image appropriate to the registration processing for registering the at least one device 20.

For example, a program according to an eleventh aspect causes at least one processor to execute the control method according to the tenth aspect.

The program described above enables displaying of the registration image that requires no unnecessary operation when the map information has not been obtained, for example. Thus, the program has an advantage of easily displaying the image appropriate to the registration processing for registering the at least one device 20.

Although the present invention has been described and illustrated in detail, it is clearly understood that the same is by way of example only and is not to be taken by way of limitation, the scope of the present invention being limited only by the terms of the appended claims.

### Reference Signs List

- 20: light fixture (device)
- 30: information terminal (control system)
- 31: receiver
- 32: display
- 321: list image
- 32m: map image
- 34: processing unit
- 36: obtainer
- A1: unregistered-device list
- A2: registered-device list

## Claims

1. A control system comprising:
an obtainer that obtains map information indicating an area where each of at least one device is disposed;
a receiver that receives input of setting for each of the at least one device; and
a processing unit that performs registration processing for registering each of the at least one device with a network, in response to the input received by the receiver,
wherein depending on whether the obtainer has obtained the map information, the processing unit changes presentation of a registration image displayed on a display for the registration processing.

2. The control system according to claim 1,
wherein if the obtainer has obtained the map information, the processing unit displays, on the display in response to the input received by the receiver, the registration image including a map image that is used for placement setting performed to associate an installation position of a registration-target device in the area with identification information on the registration-target device.

3. The control system according to claim 2,
wherein the processing unit displays, on the display in response to the input received by the receiver, one of: a list of one or more unregistered devices that are not registered with the network, among the at least one device; or a list of one or more unplaced devices for which the placement setting has not been performed, among the at least one device.

4. The control system according to claim 2 or claim 3,
wherein if the at least one device includes an unplaced device for which the placement setting has not been performed, the processing unit places the unplaced device in any given position on the map image and displays a mark meaning yet-to-be-determined on the display, the mark indicating that the placement setting has not been performed for the unplaced device.

5. The control system according to any one of claim 2 to claim 4,
wherein the processing unit registers, with the network, each of the at least one device that is detected in response to the input received by the receiver and displays, on the display, a list of one or more registered devices that are registered with the network as a list of one or more unplaced devices for which the placement setting has not been performed.

6. The control system according to any one of claim 1 to claim 5,
wherein if the obtainer has not obtained the map information, the processing unit displays, on the display, the registration image including a list image that indicates a list of at least one device among the at least one device.

7. The control system according to claim 6,
wherein the processing unit displays, on the display, a list of one or more unregistered devices that are not registered with the network among the at least one device and a list of one or more registered devices that are registered with the network among the at least one device.

8. The control system according to claim 6,
wherein the processing unit registers, with the network, each of the at least one device that is detected in response to the input received by the receiver and displays, on the display, a list of one or more registered devices that are registered with the network.

9. The control system according to claim 1,
wherein if the obtainer has obtained the map information, the processing unit displays, on the display in response to the input received by the receiver, one of:
the registration image including a map image that is used for placement setting performed to associate an installation position of a setting-target device in the area with identification information on the setting-target device; or
the registration image including a list image that indicates a list of at least one device among the at least one device.

10. A control method comprising:
receiving input of setting for each of the at least one device;
performing registration processing for registering each of the at least one device with a network, in response to the input received in the receiving; and
changing presentation of a registration image displayed on a display for the registration processing, depending on whether map information indicating an area where each of the at least one device is disposed has been obtained.

11. A program that causes at least one processor to execute the control method according to claim 10.
